# EUROPÄISCHE PATENTANMELDUNG

(11) **EP 1 980 427 A2**
(43) Veröffentlichungstag der Anmeldung: **15.10.2008**
(21) Anmeldenummer: 08007028.7
(22) Anmeldetag: 09.04.2008
(51) Int. Cl.: B60G 11/14, B60G 17/019

(54) **Feder-Einheit mit Sensor für den Federweg**

(30) Priorität: 11.04.2007 DE 102007017308
(71) Anmelder: AB Elektronik GmbH, 59368 Werne (DE)
(72) Erfinder: Klopfenstein, Laurent, 59368 Werne (DE)
(74) Vertreter: Wenzel & Kalkoff

(57) **Zusammenfassung**

Beschrieben ist eine Feder-Einheit mit einem Zentralelement, bspw. einem Stoßdämpfer (18). Um das Zentralelement (18) herum ist eine Schraubenfeder (16) mit mehreren Windungen angeordnet. Zur Ermittlung des Federwegs ist ein Sensor (24,124) vorgesehen mit einem ersten Sensorteil (28,128) und einem zweiten Sensorteil (32,132). Die relative Position der Sensorteile ist durch den Sensor ermittelbar.

Um eine Feder-Einheit (10) zu schaffen, die insbesondere zur Verwendung im Kfz-Bereich geeignet ist und auf baulich möglichst einfache Weise eine Ermittlung des Federweges erlaubt, ist vorgesehen, dass mindestens eines der Sensorteile (32, 128,132) an einer Federwindung (16a, i6b) der Feder (16) angebracht ist.

## Beschreibung

Die Erfindung betrifft eine Feder-Einheit mit einem Zentralelement und einer um das Zentralelement herum gewundenen Schraubenfeder und einen Sensor hierfür.

Ein Beispiel einer derartigen Federeinheit ist eine als McPherson-Federbein bekannte Einheit aus einem Stoßdämpfer als Zentralelement und einer darum angeordneten Schraubenfeder. Ein McPherson-Federbein wird im Fahrwerkbereich in Kraftfahrzeugen eingesetzt. Die Einheit weist zwei endseitige Montagepunkte auf, von denen einer bspw. karosserieseitig und der andere beispielsweise an einem Achselement zu befestigen ist. Eine Relativbewegung der Montagepunkte zueinander, wie sie bei Fahrwerksbewegungen entsteht, führt zum Zusammendrücken der Feder, während gleichzeitig der Stoßdämpfer zusammengedrückt wird, um die Bewegung zu dämpfen, üblicherweise als hydraulischer Dämpfer, bei dem eine Kolbenstange in einen Zylinder einfährt.

Für eine Vielzahl von Regelungsaufgaben im Betrieb eines Kfz ist es sinnvoll, den jeweils aktuellen Bewegungszustand einer Rad- bzw. Achsaufhängung mit Hilfe eines Sensors feststellen zu können. Der entsprechende Sensorwert kann verwendet werden bspw. für eine Scheinwerferregelung oder zur Beeirlflussung eines einstellbaren Fahrwerks etc.

In der DE 20 2005 014 342 U1 ist ein linear-induktiver Sensor für eine Scheinwerferregelung in Kraftfahrzeugen dargestellt. Der Sensor weist zwei zueinander bewegbare Teile auf. Ein erstes Sensorteil ist an einem Fahrwerkelement und ein zweites Sensorteil an einem Karosserieelement angeordnet. Es ist angegeben, daß das Fahrwerkelement am Kolben und das Karosserieelement am Zylinder eines Stoßdämpfers angeordnet sein kann. Als Sensor wird ein induktiver Sensor verwendet, bei dem das eine Sensorteil einen Spulenschaltkreis mit mehreren Spulen und das andere Sensorteil einen als induktives Koppelelement arbeitenden Resonanzkreis umfaßt. Der Resonanzkreis ist über ein Resonanzkreis-Halteelement direkt an einem Kolbenelement befestigt, während das Spulenschaltkreis-Halteelement direkt an einem Zylinderelement des Stoßdämpfers angeordnet ist. Resonanzschaltkreis und Spulenschaltkreis werden von den Elementen gehalten. Bei Veränderung der Höhe zwischen Karosserie und Rad wird der Resonanzschaltkreis über den Spulenschaltkreis in einer linearen Bewegung bewegt und die jeweilige Position ausgewertet. Der so gewonnene Sensorwert wird für eine Leuchtenregelung verwendet, bei der eine Scheinwerferregelungseinheit den Verstellwinkel von Scheinwerfern des Kfz anpaßt.

In der DE 10 2004 045 670 ist eine Vorrichtung zur Erfassung der Einfederungslage eines Kraftfahrzeuges offenbart. Zwischen Achsteilen und dem Chassis des Fahrzeugs ist in einer Ausführung eine Schraubenfeder als Federelement angebracht. Eine Magnetanordnung ist unmittelbar an dem Federelement befestigt. Gegenüberliegend ist ein Magnetfeldsensor an dem Chassis derart befestigt, dass er sich zwischen zwei Magnetpolen der Magnetanordnung befindet. Die Magnetpole sind einander zugewandt, so dass mittig in dem dazwischen gebildeten Luftspalt die magnetische Feldstärke zu Null wird. Befindet sich der Magnetfeldsensor in Normallage des Fahrzeugs in dieser Ebene, so wird keine Feldstärke detektiert. Bei der kleinsten Verschiebung detektiert der Magnetfeldsensor einen Anstieg der Intensität der Feldstärke.

Einige der bisher vorgeschlagenen Sensor-Lösungen haben sich als baulich relativ aufwändig erwiesen. Die Schwierigkeiten bei der Konstruktion und Anbringung eines geeigneten Sensors betreffen einerseits die hohen mechanischen Anforderungen durch die an der Federeinheit wirkenden hohen Kräfte und relativ langen Federwege. Zum anderen sollte sich ein Sensor gut in den mechanischen Aufbau der Federeinheit mit Zentralelement und darum angeordneter Schraubenfeder integrieren lassen.

Es ist daher Aufgabe der Erfindung, eine Feder-Einheit und einen Sensor, insbesondere zur Verwendung im Kfz-Bereich vorzuschlagen, die auf baulich möglichst einfache Weise eine Ermittlung des Federweges erlaubt.

Diese Aufgabe wird gelöst durch eine Federeinheit alternativ nach Anspruch 1 oder nach Anspruch 6. Abhängige Ansprüche beziehen sich auf vorteilhafte Ausführungsformen der Erfindung.

Die Erfindung wendet sich ab von einer Erfassung des Federwegs nur am Zentralelement. Statt dessen wird die Bewegung an der Feder selbst ausgenutzt, um den Federweg zu ermitteln. Dies ermöglicht es, eine kleinere und weniger aufwändige Sensoreinheit zu verwenden, da diese nun nicht mehr an beiden Enden des Zentralelements angebracht ist.

Bei der erfindungsgemäßen Feder-Einheit ist ein Sensor zur Ermittlung des Federweges vorgesehen, der aus einem ersten und einem zweiten Sensorteil besteht, deren relative Position als Sensorwert ermittelbar ist. Hiervon ist mindestens ein Teil an einer Federwindung angebracht. Der andere Teil ist, wie nachfolgend genauer erläutert wird, entweder an einer anderen Stelle der Feder oder am Zentralelement angebracht. In beiden Fällen ergibt sich bei Einfedern der Federeinheit eine Relativbewegung, so dass ein Sensorwert ermittelt werden kann, aus dem der Federweg bestimmbar ist.

Gemäß dem ersten Aspekt der Erfindung ist der erste Sensorteil an dem Zentralelement und der zweite Sensorteil an einer Federwindung angebracht. Beim Einfedern der Federeinheit ist die sich ergebende Relativbewegung zwischen der Federwindung und dem Zentralelement durch den Sensorwert ermittelbar.

Bei einer solchen Federeinheit kann der Sensor erheblich kleiner gebaut werden als bei zuvor bekannten Lösungen. Die Relativbewegung der Sensorteile entspricht stets nur einem Anteil des vollen Federwegs zwischen den Montagepunkten. Hierbei ist die Abhängigkeit zwischen den beiden Bewegungen bekannt und hängt ab von der Feder sowie von dem Anbringungspunkt, d.h. der Auswahl der Federwindung, an der der zweite Sensorteil angebracht wird. Im einfachsten Fall ist die Feder mindestens im Wesentlichen homogen ausgebildet, d.h. dass jede Windung mit einer Abweichung von z. B. max. +/- 10% den gleichen Anteil am Gesamtfederweg erfährt. Dann ist der ermittelte Sensorweg mindestens im Wesentlichen proportional zum gesamten Federweg. Der Proportionalitätsfaktor ist vom Montagepunkt des zweiten Sensorteils abhängig und kann leicht errechnet oder durch Versuche ermittelt werden. In vielen realen Fällen kann hingegen die Abhängigkeit zwischen Sensorweg (d. h. Relativbewegung der Sensorteile) und Federweg zwar eindeutig (z. B. monoton) aber nichtlinear sein. Diese Fälle können - je nach benötigter Genauigkeit - ohne weiteres durch entsprechende Berechnungen abgedeckt werden, solange die Abhängigkeit bekannt (z. B. berechenbar oder durch Versuche ermittelbar) ist.

Geht man von einem ersten und zweiten Montagepunkt aus, bei der das Zentralelement längenvariabel zwischen den Montagepunkten angeordnet und zweiteilig mit einem ersten Teil am ersten Montagepunkt und einem zweiten Teil am zweiten Montagepunkt ausgebildet ist, dann ist der erste Sensorteil bevorzugt am ersten Teil des Zentralelements angeordnet. Gemäß einer Weiterbildung der Erfindung ist dann vorgesehen, dass der zweite Sensorteil an einem solchen Punkt der Feder angeordnet ist, der - bezogen auf die Gesamtlänge der Feder - in der ersten Hälfte, ausgehend vom ersten Montagepunkt aus, liegt. Für den bevorzugten Fall einer homogenen Feder entspricht dann der Sensorweg nur maximal der Hälfte des gesamten Federwegs, so dass der Sensor entsprechend deutlich kleiner ausfallen kann. Zudem ist es auf diese Weise möglich, den Sensor ausschließlich an einer Hälfte (in Längsrichtung) der Einheit anzubringen. Weiter bevorzugt ist der zweite Sensorteil noch näher am ersten Montagepunkt angeordnet, bspw. im ersten Viertel der Gesamtlänge der Feder. Besonders bevorzugt ist eine Anbringung im Bereich der ersten beiden Windungen der Feder.

Gemäß einer Weiterbildung der Erfindung umfasst das erste Sensorteil eine um das Zentralelement herum angeordnete Manschette. Diese Art der Anbringung ist besonders einfach und kommt ohne Eingriff in die Struktur des Zentralelements, bspw. eines Stoßdämpfers, aus.

Gemäß dem zweiten, alternativen Aspekt der Erfindung ist der erste Sensorteil an einer ersten Windung der Feder und der zweite Sensorteil an einer zweiten Windung der Feder angebracht. Dadurch, dass die erste und zweite Federwindung im Abstand voneinander angeordnet sind (bevorzugt liegen sie in Längsrichtung der Einheit hintereinander) ergibt sich beim Einfedern der Federeinheit eine Änderung des Abstandes zwischen den Federwindungen. Die entsprechende Relativbewegung vom ersten und zweiten Sensorteil kann als Sensorwert ermittelt werden.

Auch bei dieser alternativen Lösung kann der Sensor erheblich kleiner gebaut werden als bei zuvor bekannten Lösungen, da auch hier der Sensorweg nur einem Bruchteil des vollen Federwegs zwischen den Montagepunkten entspricht. Auch hier ist die Abhängigkeit zwischen Sensorweg und gesamten Federweg bekannt bzw. leicht ermittelbar und entspricht im bevorzugten, einfachsten Fall einer homogenen Feder einem Proportionalitätsfaktor. Ein Vorteil der Lösung ist es, daß der Sensor universell für eine große Anzahl unterschiedlicher Einheiten verwendet werden kann, da es nur auf die Feder, nicht aber auf das Zentralelement ankommt.

Gemäß einer Weiterbildung dieser Ausgestaltung ist das erste Sensorteil an der zweiten Windung der Feder verschiebbar geführt. D.h., das erste Sensorteil ist zwischen erster und zweiter Windung der Feder angebracht, bspw. mittels eines Langloches, durch das die zweite Windung hindurchgreift. Besonders bevorzugt ist der erste Sensorteil so allein durch die Feder getragen. So kann sich der Sensor mit der Feder bewegen, ohne dass die hohen Kräfte schädlich auf ihn einwirken können.

In allen zuvor beschriebenen Ausführungen ist der Sensor bevorzugt als Linearsensor ausgebildet, bei dem eine Verschiebung der Sensorteile gegeneinander ermittelt wird. Weiter bevorzugt ist eine Führung der Sensorteile bei der Relativbewegung vorgesehen, bspw. durch Führmittel wie Schienen bzw. Anlageflächen am ersten Sensorteil, an denen bzw. zwischen denen das zweite Sensorteil bei der Bewegung geführt wird.

Weiter bevorzugt ist es, dass der erste Sensorteil an der Feder so befestigt ist, dass er nach Innen zeigt. Es kann ein die Federwindung umgreifendes Befestigungselement vorgesehen sein, um den zweiten Sensorteil an der Feder zu befestigen, ohne dass die Struktur der Feder geändert wird.

Gemäß einer bevorzugten Ausführungsform der Erfindung ist der Sensor als induktiver Sensor ausgebildet. Dabei umfasst der erste Sensorteil einen Spulenschaltkreis und der zweite Sensorteil ein induktives Koppelelement. Der Spulenschaltkreis weist mindestens eine Erregerspule auf, die bei Beaufschlagung mit einem Wechselspannungssignal ein magnetisches Wechselfeld erzeugt. Das magnetische Wechselfeld induziert im induktiven Koppelelement einen Strom und hierdurch ein überkoppeltes Signal, das von mindestens einer Empfängerspule des Spulenschaltkreises empfangen wird. Mindestens eine von Erregerspule oder Empfängerspule weist hierbei eine solche Form auf, dass eine positionsabhängige Überkoppelung durch das Koppelelement gegeben ist. Hierfür ist die betreffende Spule räumlich so ausgelegt, dass sie einen variierenden Verlauf quer zur Richtung der zu detektierenden Linearbewegung aufweist, d.h. also nicht lediglich parallel in Längsrichtung verläuft, sondern bspw. in einem bevorzugt periodischen Muster, z.B. in Sinusform oder Rechteckform.

Bei dem induktiven Koppelelement kann es sich um jedes Element handeln, dass durch die Erregerspule angeregt ein überkoppeltes Signal in der Empfängerspule auslösen kann, bspw. um eine Leiterschleife oder ein Ferritelement etc.- Bevorzugt handelt es sich bei dem induktiven Koppelelement jedoch um ein Schwingkreiselement mit wenigstens einer Induktivität und einer Kapazität, das eine Resonanzfrequenz aufweist, auf der die Anregung bevorzugt erfolgt. Hierdurch wird eine höhere Signalstärke und damit geringere Empfindlichkeit gegenüber bspw. schwankendem Abstand der beiden Sensorteile erreicht.

Wie bereits erwähnt kann eine erfindungsgemäße Federeinheit im Prinzip für beliebige Zwecke eingesetzt werden. Bevorzugt handelt es sich jedoch um eine Feder-/Stoßdämpfer-Einheit zur Verwendung im Fahrwerkbereich eines Kfz, d.h., das Zentralelement ist bevorzugt ein Stoßdämpfer.

Für den elektrischen Anschluss des Sensors ist es bevorzugt, dass dieser an einem Ende der Einheit herausgeführt ist. Werden die Federn an diesem Ende in einem Tellerelement gehalten, so ist bevorzugt, dass ein elektrischer Anschluss - bspw. ein Anschlusskabel - des Sensors durch ein Loch des Tellerelement hindurchgeführt ist. Hierbei kann es sich um eine zentrale Öffnung handeln. Um aber Funktion und Aufbau bereits vorbekannter Feder-/Zentralelement-Einheiten nicht zu beeinträchtigen, ist eine Durchführung außerhalb der Mitte des Tellerelements bevorzugt.

Nachfolgend wird eine Ausführungsform der Erfindung anhand von Zeichnungen näher beschrieben. In den Zeichnungen zeigen:
- Fig. 1: eine Seitenansicht einer Feder-/Stoßdämpfer-Einheit als erste Ausführungsform der Erfindung;
- Fig. 2: eine perspektivische Ansicht der Einheit aus Fig. 1;
- Fig. 3: eine perspektivische Teilansicht der Einheit aus Fig. 1, Fig. 2;
- Fig. 4: eine perspektivische, vergrößerte Ansicht eines Sensors der Einheit aus Fig. 1-3;
- Fig. 5: ein Querschnitt durch den Sensor aus Fig. 4;
- Fig. 6: ein Längsschnitt durch den Sensor aus Fig. 4, Fig. 5;
- Fig. 7: eine perspektivische Teil-Darstellung einer zweiten Ausführungsform einer Federeinheit;
- Fig. 8: eine Seitenansicht der Einheit aus Fig. 7;
- Fig. 9: eine Frontansicht der Einheit aus Fig. 7, Fig. 8;
- Fig. 10: einen Längsschnitt durch die Einheit aus Fig. 7-9.

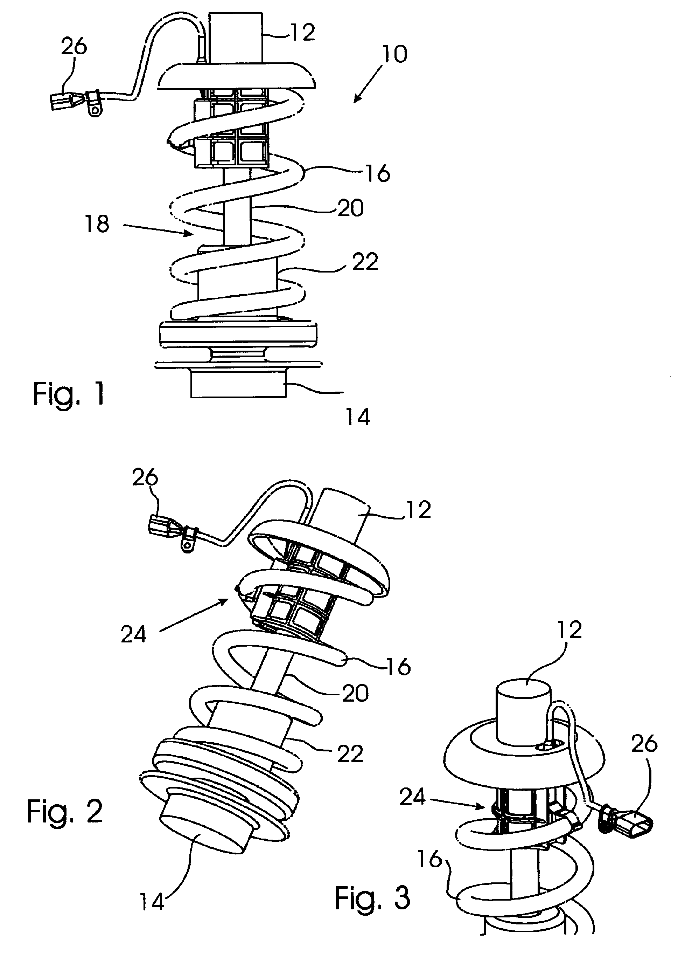

In Fig. 1-3 ist eine erste Ausführungsform einer Feder-/Stoßdämpfer-Finheit 10 gezeigt. Sie umfasst ein erstes und ein zweites Montageende 12, 14. Zwischen an den Montageenden 12, 14 angeordneten Tellern ist eine Schraubendruckfeder 16 eingespannt. Mittig zwischen den Montageenden 12, 14 verläuft als längenvariables, lineares Längselement ein Stoßdämpfer 18 mit einem Kolben 20, der dämpfend in einem Zylinder 22 verschieblich aufgenommen ist.

Bei der Einheit 10 handelt es sich um ein McPherson-Federbein zur Verwendung im Fahrwerkbereich eines Kfz. Es ist dort in bekannter Weise so angebracht, dass es bei Fahrwerkbewegungen gegen die Kraft der Feder 16 einfedert, so dass sich eine Linearbewegung der Montagepunkte 12, 14 gegeneinander ergibt. Diese Bewegung wird durch den Stoßdämpfer 18 gedämpft. Die Einheit verfügt über einen Sensor 24, mit dem die Verschiebung der Montagepunkte 12, 14 gegeneinander, d.h. der Federweg der Feder 16 ermittelt und als elektrisches Signal über einen Anschluss 26 ausgegeben wird.

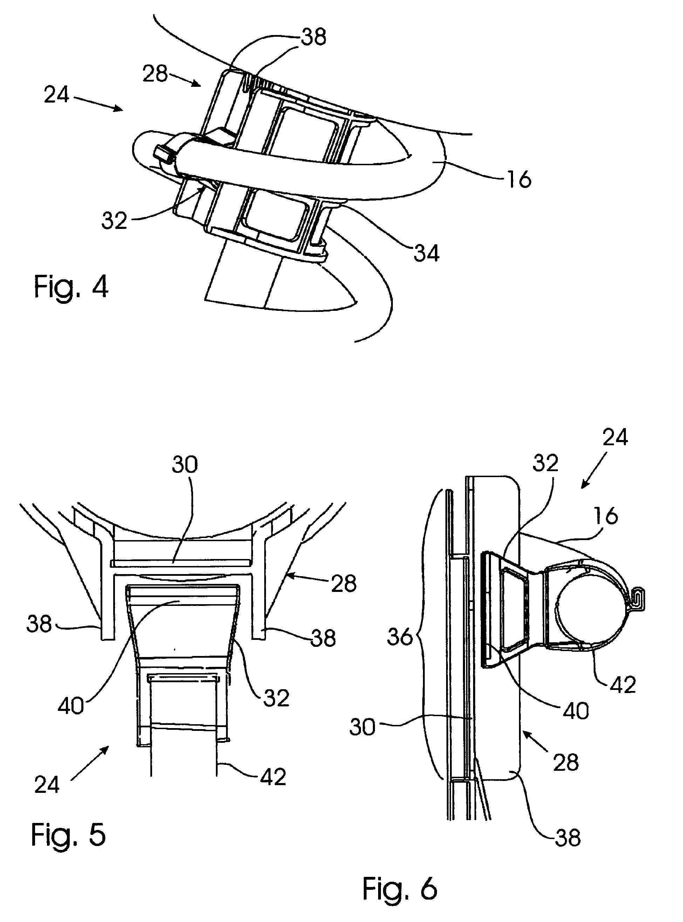

Der Sensor 24 und seine Anbringung sind in Fig. 4 perspektivisch und in Fig. 5, Fig. 6 im Quer- bzw. Längsschnitt vergrößert dargestellt. Der Sensor umfasst einen ersten Sensorteil (Statorelement) 28 und einen zweiten, gegenüber dem ersten Sensorteil 28 beweglichen zweiten Sensorteil 32.

Das Statorteil 28 ist mittels einer Manschette 34, die den Stoßdämpfer 18 umgreift, an diesem befestigt. Es weist einen sich in Längsrichtung der Einheit 10 erstreckenden Sensorbereich 36 auf. Seitlich des Sensorbereichs sind Führungen 38 vorgesehen. Entlang des Sensorbereiches 36 erstreckt sich eine Leiterplatte 30 mit einem darauf angebrachten Flachspulen-Schaltkreis aus Leiterbahnen.

Der Sensor 24 ist eine induktiver Sensor, der nach dem in WO-A-03/038379 beschriebenen Prinzip arbeitet.

Das Statorelement 28 ist als einstückiges Kunststoffteil im Spritzgussverfahren hergestellt, wobei die Leiterplatte 30 im Kunststoffmaterial eingebettet ist

Bei der Leiterplatte 30 handelt es sich um einen Spulenschaltkreis, auf dem als flache Leiterstruktur (mit Durchkontaktierungen zur Herstellung von Überkreuzungen) über die Länge variierende, räumlich in Quadratur angeordnete Sendespulen und eine als Schleife ausgebildete Empfangsspule vorhanden sind. Weiter ist auf der Leiterplatte 30 eine integrierte Auswerteschaltung (ASIC) (nicht dargestellt) vorgesehen, an die die Spulen angeschlossen sind. Die Auswerteschaltung ist mit dem Stecker 26 verbunden, so daß sie elektrisch kontaktiert werden kann.

Der zweite Sensorteil 32 umfasst eine Leiterplatte 40 mit einem Schwingkreis (nicht dargestellt) umfassend eine Kapazität (SMD-Kondensator) und eine Induktivität (als Flachspule aus Leiterbahnen).

Wie insbesondere aus Fig. 5, Fig. 6 ersichtlich liegt die Leiterplatte 40 mit dem darauf gebildeten Resonanzkreis direkt dem Spulenschaltkreis 30 gegenüber. Hierdurch ist ein Sensor zur Ermittlung der Position des Resonanzkreises 40 innerhalb des Sensorbereichs 36 gebildet, wie er bspw. in der WO-A-03/038379 beschrieben ist. Die Sendespulen des Spulenschaltkreises werden mit speziellen zeitlichen Spannungsverläufen erregt, so daß sich entlang des Sensorbereiches 36 ein zeitlich und räumlich veränderliches magnetisches Feld ergibt. Die am Ort der Leiterplatte 30 wirkenden Feldanteile erregen den Resonator 40. Ein von diesem zurückgesendetes Signal wird von der Empfängerspule empfangen. Die Erzeugung der Signalverläufe für die Sendespulen erfolgt ebenso wie die Auswertung des von der Empfangsspule empfangenen Signals im ASIC. Hier wird aus den Phaseninformationen des Ausgangssignals ein Wert für die Stellung des zweiten Sensorelements 32 ermittelt. Dieser kann als analoges oder digitales Signal am Steckeranschluß 26 ausgegeben werden.

Seitlich ist eine Abschirmung durch die Wände 38 gegenüber Fremdkörpern und Verschmutzungen vorgesehen.

Der zweite Sensorteil 32 ist an einer Windung der Feder 16 angebracht. Ein Ringelement 42 umgreift die Feder 16 und befestigt so einen aus Kunststoff hergestellten Stempelkörper des zweiten Sensorteils 32 an dem ausgewählten Ort der Feder 16, wobei sich der Stempelkörper von der Windung der Feder 16 nach Innen in Richtung auf den Stoßdämpfer 18 erstreckt und die im Kunststoffmaterial eingebettete Leiterplatte 40 mit dem Resonanzkreis gegenüber der Leiterplatte 30 mit dem Spulenschaltkreis positioniert wird.

Durch diese Anbringung kommt es beim Einfedern der Feder 16 durch entsprechende, zwischen den Montagepunkten 12, 14 wirkende Kräfte zu einer Verschiebung des zweiten Sensorteils 32 gegenüber dem ersten Sensorteil 28. Denn bei der entsprechenden Bewegung verschiebt sich der in Fig. 1 oben dargestellte erste Teil des Stoßdämpfers 18 gegenüber dem unteren, zweiten Teil um den vollen Federweg. Die Feder 16 hingegen ist als homogene Feder ausgebildet, so dass sich jede Windung davon um den gleichen Betrag verschiebt. Es kommt somit zu einer Relativbewegung zwischen dem Anbringungspunkt des zweiten Sensorteils 32 an der ausgewählten Windung der Feder 16 und dem ersten Sensorelement 28.

Diese Relativbewegung wird durch den Sensor 24 in der oben beschriebenen Weise erfasst und als elektrisches Signal ausgegeben.

Aus dem ermittelten Wert kann anhand der vorhandenen Kenntnisse über die Feder 16 und den gewählten Anbringungspunkt leicht der Gesamtbetrag des zurückgelegten Federweges ermittelt werden. Bei der gezeigten homogenen Feder 16 ist der vollständige Federweg proportional zu dem ermittelten Sensorweg. Der gesamte Federweg kann damit aus dem Sensorwert durch Multiplikation mit einem Proportionalitätsfaktor ermittelt werden. Der Proportionalitätsfaktor ergibt sich aus der Anbringungsposition des zweiten Sensorelements 32 an der Feder 16.

Im dargestellten Beispiel weist die Feder 16 ca. 5 Windungen auf, wobei die Anbringungsposition so gewählt wurde, dass das zweite Sensorteil 32 etwa am Ende der ersten vollen Windung (gerechnet vom ersten Montagepunkt 12 an) angebracht ist. Hieraus ergibt sich ein ungefährer Wert von 5 für den Proportionalitätsfaktor.

Der am Stecker 26 gelieferte Sensorwert kann bereits eine Multiplikation mit dem Proportionalitätsfaktor enthalten, so dass hier stets ein Wert für den gesamten Federweg ausgegeben wird. In Anwendungsfällen, in denen sich die Feder 16 nicht vollständig homogen verhält und eine höhere Genauigkeit gefordert wird, kann der vollständige Federweg aus dem Sensorweg auch durch genauere Berechnungen ermittelt werden, die bevorzugt in der Auswerteschaltung (ASIC) am zweiten Sensorteil 28 direkt erfolgen. Bspw, kann eine - nicht lineare - Messkurve aufgenommen werden und hieraus eine Tabelle (look-up-table) erstellt werden mit deren Hilfe die Auswerteschaltung die Umrechnung vornimmt.

Ein wesentlicher Vorteil der dargestellten Ausführungsform besteht darin, dass ein Wert für einen relativ großen Federweg der Gesamteinheit 10 mit einem relativ kleinen Sensor 24 ermittelt wird. Entsprechend dem oben dargestellten Proportionalitätsfaktor kann der Sensor 24 auf diese Weise gegenüber einem nur am Stoßdämpfer 18 angebrachten Sensor um den Proportionalitätsfaktor (im Beispiel: 5) kleiner ausgelegt werden.

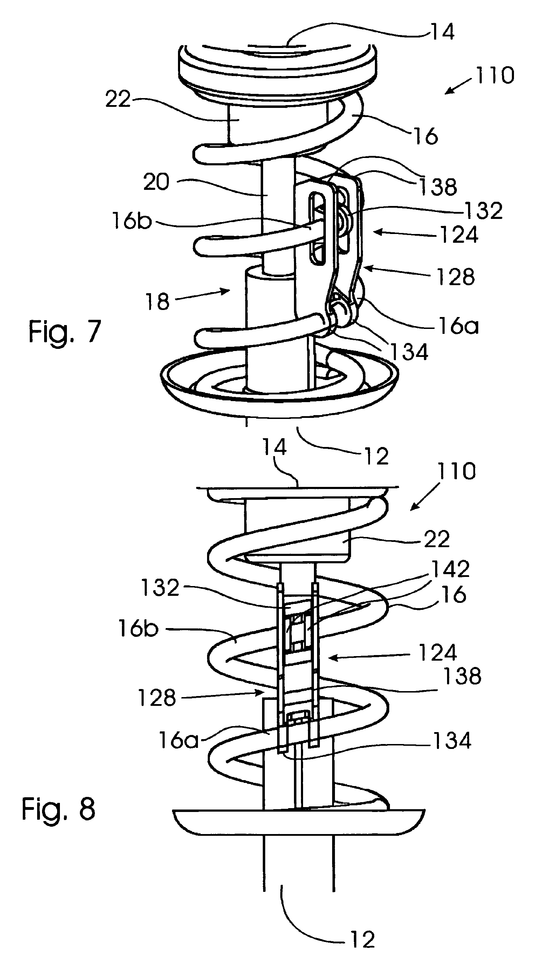

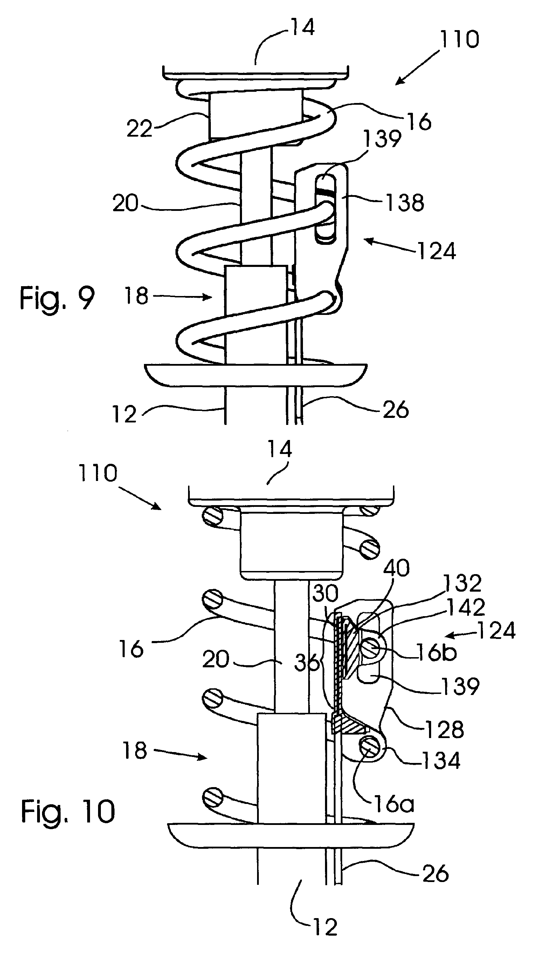

In Fig. 7-9 ist der mittlere Bereich einer zweiten Ausführungsform einer Federeinheit 110 dargestellt. Die Federeinheit 110 entspricht bis auf einen in der zweiten Ausführungsform anders gestalteten Sensor 124 der im Zusammenhang mit Fig. 1-3 beschriebenen Einheit 10. Für identische Teile wurden dieselben Bezugszeichen verwendet wie dort. Die Einheit als solches soll daher nicht noch einmal beschrieben werden.

Bei der Federeinheit 110 ist ein Sensor 124 zur Ermittlung des Federweges vorgesehen, bei dem es sich ebenfalls um einen induktiven Linearsensor mit einem Spulenschaltkreis 30 und einem Resonanzkreis 40 handelt. Anders als bei der ersten Ausführungsform ist aber von dem Sensor 124 kein Teil am Stoßdämpfer 18 angebracht, sondern der Sensor 124 ist ausschließlich mit Windungen der Feder 16 verbunden.

Der Sensor 124 umfasst ein erstes Sensorteil (Statorelement) 128 und ein gegenüber diesem bewegliches zweites Sensorteil 132.

Das Statorteil 128 ist als Kunststoff-Spritzgussteil ausgebildet Es umgreift mit einer Doppel-Öse 134 eine erste Windung 16a der Feder 16. So ist es dort in einer Weise angebracht, dass eine Verdrehung um die Federwindung herum, aber keine Verschiebung gegenüber der Federwindung in Längsrichtung der Einheit möglich ist. In das erste Sensorteil 128 ist eine Leiterplatte 30 mit einem Spulenschaltkreis eingebettet, der sich entlang eines Sensorbereichs 36 erstreckt. Entlang des Sensorbereiches weist das erste Sensorteil 128 im Querschnitt im Wesentlichen eine U-Form auf mit einem Boden (in dem der Spulenschaltkreis 30 eingebettet ist) und zwei Seitenwänden 138. Die Seitenwände 138 weisen jeweils Längsschlitze 139 auf.

Im Inneren des U-Profils ist das zweite Sensorelement 132 angeordnet. Dieses ist mit einer Doppelöse 142 an einer zweiten Federwindung 16b der Feder 16 angebracht. Es weist einen zum Inneren der Feder 16 gerichteten Stempelkörper auf, in dem die Leiterplatte mit dem als Resonanzkreis ausgebildeten induktiven Koppelelement eingeformt ist. Das induktive Koppelelement 40 ist am Sensorbereich 36 gegenüberliegend zum Spulenschaltkreis 30 positioniert.

Der zweite Sensorteil 132 ist gegenüber dem ersten Sensorteil 128 so angeordnet, dass es sich in Längsrichtung entlang des Sensorbereiches 36 bewegen kann und dabei in den beiden Richtungen quer zur Längsachse geführt ist. Einerseits ist der Stempelkörper 132 zwischen den Seitenwänden 138 geführt (siehe Fig. 8), andererseits durchgreift die zweite Windung 16b der Feder 16 die Längsschlitze 139 der Seitenwände 138, so dass auch hier eine Längsführung entsteht.

Bei einem Einfedern der Feder 16 verschieben sich die Windungen 16a, i6b der Feder 16 anteilig in Bezug auf den gesamten Federweg. Im dargestellten, bevorzugten Fall einer homogenen Feder (im Beispiel mit vier Windungen) verteilt sich der gesamte Federweg der Einheit 110 auf die Anzahl Windungszwischenräume. So ergibt sich auch hier ein Proportionalitätsfaktor (der im gezeigten Beispiel in etwa den Wert 3,5 aufweist).

Auch beim zweiten Sensor wird ein Sensorweg ermittelt, der (bei linearer Abhängigkeit) um den Proportionalitätsfaktor geringer ist als der gesamte Federweg. Somit kann der gesamte Federweg durch entsprechende Umrechnung in der Auswerteschaltung (diese ist unmittelbar auf der Leiterplatte 30 angebracht, in den Figuren nicht dargestellt) errechnet und als Signal an einem elektrischen Anschluss 126 ausgegeben werden. In gleicher Weise wie bei der ersten Ausführungsform kann alternativ auch ein nicht linearer Zusammenhang zwischen Sensorweg und Federweg berücksichtigt werden.

Der Sensor 124 gemäß der zweiten Ausführungsform ist hierbei ebenfalls besonders einfach aufgebaut. Durch die Befestigung des Statorteils 128 an einem Festpunkt (Öse 134) und einem Gleitpunkt (Langlöcher 139) ist er flexibel mit der Feder 16 beweglich. Auch im Fall der zweiten Ausführungsform ist der Sensor erheblich kleiner als der gesamte erfasste Federweg.

Zu den beschriebenen Ausführungsformen sind eine Anzahl von Ergänzungen und Abweichungen denkbar. Dies betrifft zum einen die Art des dargestellten Sensors. Neben dem beschriebenen Sensor mit einem Resonanzkreis als induktiven Koppelelement sind eine Vielzahl anderer induktiver Sensoren alternativ einsetzbar. Ebenso ist es möglich, dass der Sensor 124 redundant ausgebildet ist, bspw. indem auf den Spulenschaltkreisen 30 Topologien zweier elektrisch unabhängiger induktiver Sensoren aufgebracht sind und die Gegenstücke auf der Leiterplatte 40 zwei jeweils zugeordnete induktive Koppelelemente umfassen. Ebenso ist alternativ natürlich auch ein Sensor nach völlig anderem Sensorprinzip, bspw. als Hall-Effekt-Sensor, Potentiometer oder optischer Sensor einsetzbar.

In der zweiten Ausführungsform kann der Sensor statt wie gezeigt lediglich zweier unmittelbar benachbarter Federwindungen 16a, 16b eine größere Anzahl, oder weiter entfernte Windungen umfassen.

## Patentansprüche

1. Federeinheit mit
- einem Zentralelement (18)
- und einer um das Zentralelement (18) herum angeordneten Schraubenfeder (16) mit mehreren Windungen (16a, 16b),
- und einem Sensor (24,124) zur Ermittlung des Federwegs mit einem ersten und einem zweiten Sensorteil (28,128; 32,132), wobei die relative Position der Sensorteile durch den Sensor ermittelbar ist,
**dadurch gekennzeichnet, dass**
- der erste Sensorteil (28) an dem Zentralelement (18),
- und der zweite Sensorteil (32) an einer Federwindung angebracht ist.

2. Federeinheit nach Anspruch 1, bei der
- die Einheit einen ersten und einen zweiten Montagepunkt (12, 14) aufweist,
- und das Zentralelement (18) längenvariabel zwischen den Montagepunkten (12, 14) angeordnet ist und zwei Teile (20, 22) umfasst,
- von denen ein Teil (20) fest am ersten Montagepunkt (12) und der zweite Teil (22) fest am zweiten Montagepunkt (14) angeordnet ist,
- wobei der erste Sensorteil (28) am ersten Teil (20) des Zentralelements (18) angeordnet ist.

3. Federeinheit nach Anspruch 2, bei der
- der zweite Sensorteil (32) an der Feder (16) an einem Anbringungspunkt angebracht ist, der in der dem ersten Montagepunkt (12) zugewandten Hälfte der Feder (16) liegt.

4. Federeinheit nach Anspruch 2 oder 3, bei der
- der zweite Sensorteil (32) an einer der ersten beiden Windungen der Feder (16), gerechnet vom ersten Montagepunkt (12) aus, angeordnet ist.

5. Federeinheit nach einem der vorangehenden Ansprüche, bei der
- der erste Sensorteil (28) eine Manschette (34) umfasst, die um das Zentralelement (18) herum angeordnet ist.

6. Federeinheit mit
- einem Zentralelement (18)
- und einer um das Zentralelement (18) herum angeordneten Schraubenfeder (16) mit mehreren Windungen (16a, 16b),
- und einem Sensor (24,124) zur Ermittlung des Federwegs mit einem ersten und einem zweiten Sensorteil (28,128; 32,132), wobei die relative Position der Sensorteile durch den Sensor ermittelbar ist,
**dadurch gekennzeichnet, dass**
- der erste Sensorteil (128) an einer ersten Windung (16a) der Feder (16),
- und der zweite Sensorteil (132) an einer zweiten Windung (16b) der Feder (16) angebracht ist.

7. Federeinheit nach Anspruch 6, bei der
- der erste Sensorteil (128) an der zweiten Windung (16b) der Feder (16) verschiebbar geführt ist.

8. Federeinheit nach Anspruch 7, bei der
- der erste Sensorteil (128) mindestens ein Langloch (139) aufweist, durch das die zweite Windung (16a) der Feder (16) hindurchgreift.

9. Federeinheit nach einem der vorangehenden Ansprüche, bei der
- der zweite Sensorteil (32) so an der Feder (16) befestigt ist, dass er nach innen ragt.

10. Federeinheit nach einem der vorangehenden Ansprüche, bei der
- der Sensor (24, 124) als Linearsensor ausgebildet ist, bei dem eine Verschiebung des zweiten Sensorteil (32, 132) gegenüber dem ersten Sensorteil (28, 128) ermittelt wird.

11. Federeinheit nach Anspruch 10, bei der
- der zweite Sensorteil (32, 132) am ersten Sensorteil (28, 128) bei der Linearbewegung geführt ist.

12. Federeinheit nach einem der vorangehenden Ansprüche, bei der
- der Sensor (24, 124) als induktiver Sensor ausgebildet ist,
- bei dem der erste Sensorteil (28, 128) einen Spulenschaltkreis (30) und der zweite Sensorteil (32, 132) ein induktives Koppelelement (40) umfasst,
- wobei der Spulenschaltkreis (30) mindestens eine Erregerspule aufweist, die mit einem Wechselspannungssignal beaufschlagt wird, und ein vom Koppelelement (40) überkoppeltes Signal in mindestens einer Empfängerspule empfangen wird,
- wobei mindestens eine von Erregerspule und/oder Empfängerspule einen quer zur Richtung der Linearbewegung variierenden Verlauf aufweist, so dass die Überkopplung durch das Koppelelement (40) positionsabhängig ist.

13. Federeinheit nach einem der vorangehenden Ansprüche, bei der
- das Zentralelement als Stoßdämpfer (18) ausgebildet ist.

14. Federeinheit nach einem der vorangehenden Ansprüche, bei der
- die Feder (16) mindestens an einem Ende in einem Tellerelement gehalten ist,
- wobei ein elektrischer Anschluss des Sensors (24, 124) durch ein Loch im Tellerelement hindurchgeführt ist.
